# FASCICULE DE BREVET EUROPEEN

(11) **EP 3 314 596 B1**
(45) Date de publication et mention de la délivrance du brevet: **12.08.2020**
(21) Numéro de dépôt: 16728225.0
(22) Date de dépôt: 13.05.2016
(51) Int. Cl.: G08C 17/02, G07C 9/00

(54) **PROCÉDÉ DE COMMANDE D'UNE FONCTIONNALITÉ D'UN VÉHICULE AU MOYEN D'UN TERMINAL UTILISATEUR**
VERFAHREN ZUR STEUERUNG EINER FUNKTION EINES FAHRZEUGS MITTELS EINES BENUTZERENDGERÄTS
METHOD FOR CONTROLLING A FUNCTIONALITY OF A VEHICLE BY MEANS OF A USER TERMINAL

(30) Priorité: 13.05.2015 FR 1554361
(43) Date de publication de la demande: 02.05.2018
(73) Titulaire: Valeo Comfort and Driving Assistance, 94046 Créteil Cedex (FR)
(72) Inventeur: PETEL, Laurent, 94046 Créteil Cedex (FR)
(74) Mandataire: Delplanque, Arnaud
(86) Numéro de dépôt international: PCT/EP2016/060930
(87) Numéro de publication internationale: WO 2016/180987

(56) Documents cités:
- WO-A2-2015/032956
- US-A1- 2011 086 668

## Description

### DOMAINE TECHNIQUE AUQUEL SE RAPPORTE L'INVENTION

La présente invention concerne la commande d'une fonctionnalité d'un véhicule au moyen d'une liaison sans fil, par exemple selon le protocole *"Bluetooth Low Energy"* (ou *"BLE"*)*.*

Elle concerne plus particulièrement un procédé de commande d'une fonctionnalité d'un véhicule au moyen d'un terminal utilisateur, ainsi qu'un terminal utilisateur, une unité électronique de commande et un véhicule associés.

L'invention s'applique particulièrement avantageusement dans le cas où aucun échange préalable n'a eu lieu entre le terminal utilisateur et l'unité électronique de commande.

### ARRIÈRE-PLAN TECHNOLOGIQUE

On a proposé de commander certaines fonctionnalités d'un véhicule automobile, telles que le déverrouillage ou le verrouillage des portes et/ou le démarrage du véhicule, au moyen d'un terminal utilisateur, par exemple un téléphone intelligent couramment utilisé par l'utilisateur du véhicule.

Pour ce faire, un module de communication du terminal utilisateur entre en communication, par exemple selon le protocole BLE, avec un module de communication correspondant installé dans le véhicule automobile.

Des trames d'établissement d'une connexion (notamment des trames d'annonce) sont en général échangées entre les deux modules de communication afin d'établir une connexion entre eux. Par exemple, selon le protocole Bluetooth Low Energy, le module de communication installé dans le véhicule émet typiquement des trames d'annonce indiquant sa disponibilité pour une connexion, afin que le terminal utilisateur puisse répondre par exemple par une requête de connexion, ce qui permet normalement d'aboutir à l'établissement d'une connexion.

La connexion ainsi établie permet alors un échange de données utiles entre le terminal utilisateur et le véhicule, par exemple en vue d'une authentification mutuelle, puis de la commande de la fonctionnalité du véhicule par le terminal utilisateur.

Le temps d'établissement de la connexion peut toutefois ralentir le processus de commande de la fonctionnalité, en particulier lorsque plusieurs trames d'établissement de la connexion doivent être échangées, du fait par exemple que les modules de communication n'ont jamais échangé au préalable.

Le module de communication du véhicule automobile est par ailleurs indisponible durant cette période pour échanger avec d'autres appareils électroniques, tel qu'une clé physique du véhicule qui utiliserait le même protocole pour commander des fonctionnalités du véhicule.

Un tel module de communication est par exemple décrit dans la publication WO2015/032956.

### OBJET DE L'INVENTION

Dans ce contexte, l'invention propose un procédé de commande d'une fonctionnalité d'un véhicule équipé d'un premier module de communication, au moyen d'un terminal utilisateur équipé d'un second module de communication, caractérisé en ce qu'il comprend les étapes suivantes :
- détermination d'une donnée d'authentification par un processeur du terminal utilisateur ;
- émission par le second module de communication, au sein d'au moins une trame d'annonce, d'une requête de commande de la fonctionnalité et de la donnée d'authentification ;
- réception de la trame d'annonce par le premier module de communication et vérification de la donnée d'authentification par une unité électronique de commande du véhicule ;
- commande de la fonctionnalité par l'unité électronique de commande en cas de vérification positive.

La donnée d'authentification est ainsi transmise à l'unité électronique de commande dans une trame d'annonce (et donc au cours du processus d'établissement de la connexion) et la fonctionnalité peut ainsi être commandée avant même que la connexion soit effectivement établie (conformément au protocole utilisé pour la liaison entre le premier module de communication et le second module de communication).

On peut éventuellement prévoir une étape ultérieure d'émission, par le second module de communication, d'une requête de connexion à destination du premier module de communication.

Selon une possibilité de mise en œuvre, on peut prévoir les étapes préalables suivantes :
- émission, par le second module de communication, d'au moins une trame d'annonce (par exemple de type ADV_IND ou ADV_SCAN_IND selon les notations données plus loin),
- réception par le premier module de communication de ladite au moins une trame d'annonce,
- émission, par le premier module de communication, d'au moins une trame d'annonce (par exemple de type SCAN_REQ selon les notations expliquées plus bas), à destination du deuxième module de communication.

L'émission de la requête de commande de la fonctionnalité et de la donnée d'authentification peut dans ce cas être réalisée au sein d'une trame de type SCAN_RSP (avec la notation décrite plus loin).

On peut prévoir par ailleurs une étape préalable d'émission, par le premier module de communication, d'au moins une trame d'annonce (par exemple de type ADV_IND, ADV_SCAN_IND, ADV_NON_CONN_IND ou SCAN_RSP), à destination du deuxième module de communication comprenant une donnée d'interrogation (dénommée première donnée d'authentification dans les exemples de la description qui suit où une authentification mutuelle est envisagée).

Selon des caractéristiques optionnelles, et donc non limitatives :
- la donnée d'interrogation est cryptée ;
- la donnée d'interrogation comprend une donnée d'identification du véhicule ;
- le terminal utilisateur vérifie la donnée d'identification du véhicule et commande l'émission de la requête de commande et de la donnée d'authentification en cas de vérification positive.

Selon une possibilité de mise en œuvre, on peut prévoir les étapes préalables suivantes :
- émission, par le premier module de communication, d'au moins une trame d'annonce (de type ADV_IND ou ADV_SCAN_IND),
- réception, par le deuxième module de communication, de ladite au moins une trame d'annonce,
- émission, par le deuxième module de communication, d'au moins une trame d'annonce (de type SCAN_REQ), à destination du premier module de communication.

La trame d'annonce comprenant la donnée d'interrogation peut alors être une trame de type SCAN_RSP.

L'invention propose également une unité électronique de commande pour véhicule équipé d'un premier module de communication, caractérisée en ce qu'elle comprend un module de réception, au sein d'une trame d'annonce, d'une requête de commande d'une fonctionnalité du véhicule et d'une donnée d'authentification, un module de vérification de la donnée d'authentification et un module de commande de la fonctionnalité en cas de vérification positive.

Un véhicule peut comprendre une telle unité électronique de commande.

L'invention propose en outre un terminal utilisateur caractérisé en ce qu'il comprend un processeur programmé pour déterminer une donnée d'authentification et un module de communication agencé pour émettre, au sein d'une trame d'annonce, une requête de commande d'une fonctionnalité du véhicule et de la donnée d'authentification.

Lorsque les dispositifs précités (unité électronique de commande, terminal utilisateur) comprennent un processeur et une mémoire mémorisant notamment des instructions exécutables par le processeur, chacun des modules susmentionnés peut être réalisé par un ensemble spécifique d'instructions permettant de mettre en œuvre la fonction du module concerné (en coopération éventuellement avec un circuit extérieur au processeur tel qu'un module de communication) lorsque les instructions de l'ensemble sont exécutées par le processeur.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un exemple de contexte dans lequel peut-être mise en œuvre l'invention, comprenant notamment un véhicule et un terminal utilisateur ;
- la figure 2 représente schématiquement des composants, utiles à la compréhension de l'invention, du véhicule et du terminal utilisateur de la figure 1 ;
- la figure 3 représente les étapes principales d'un premier exemple de procédé de commande d'une fonctionnalité du véhicule conforme à l'invention ;
- la figure 4 représente des étapes spécifiques à un second exemple de procédé de commande d'une fonctionnalité du véhicule conforme à l'invention ;
- la figure 5 représente des étapes spécifiques à un troisième exemple de procédé de commande d'une fonctionnalité du véhicule conforme à l'invention.

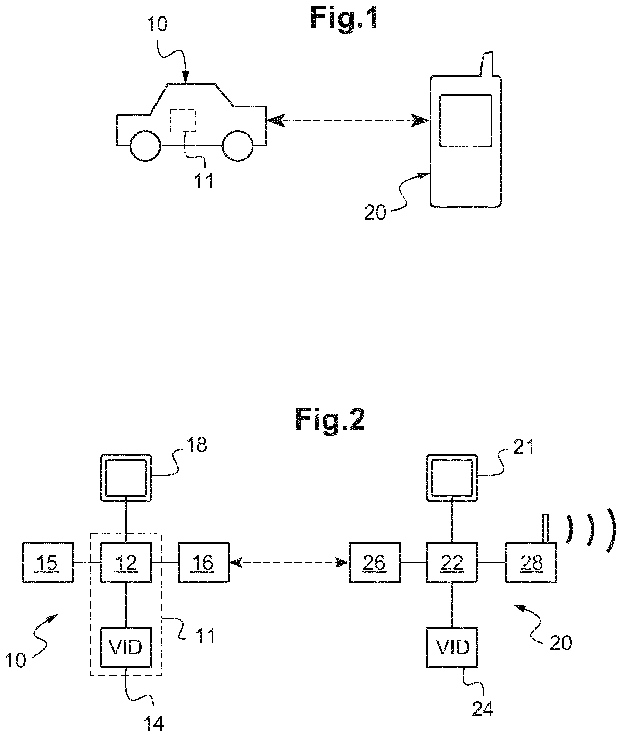

La figure 1 représente un exemple de contexte dans lequel peut être mise en œuvre l'invention.

Dans ce contexte, un véhicule 10 comprend une unité électronique de commande 11 (ou ECU pour *"Electronic Control Unit*") qui peut entrer en communication via une liaison sans fil avec un terminal utilisateur 20, par exemple un téléphone portable (ou téléphone cellulaire), éventuellement de type *"téléphone intelligent* ou *"smartphone"* selon la dénomination anglo-saxonne couramment utilisée, afin d'échanger des données avec ce terminal utilisateur 20, par exemple en vue de la commande de fonctionnalités du véhicule 10 au moyen du terminal utilisateur 20 (une telle fonctionnalité pouvant être par exemple le déverrouillage des portes du véhicule 10 ou, en variante, le démarrage du moteur du véhicule).

La liaison sans fil utilisée pour communiquer entre l'unité électronique de commande 11 et le terminal utilisateur 20 est par exemple de type Bluetooth, ici en particulier de type Bluetooth Low Energy (BLE).

Le terminal utilisateur 20 est par ailleurs conçu pour se connecter à un réseau de téléphonie mobile (non représenté).

La figure 2 représente schématiquement des composants, utiles à la compréhension de l'invention, du véhicule 10 et du terminal utilisateur 20.

Le véhicule 10 comprend notamment l'unité électronique de commande 11 déjà mentionnée, un actionneur 15 (conçu ici pour permettre le déverrouillage des portes du véhicule 10), un module de communication sans fil 16, ici selon la technologie Bluetooth Low Energy (BLE), et une interface utilisateur 18.

L'unité électronique de commande 11 comprend un processeur 12 et une unité de mémorisation 14, par exemple une mémoire non-volatile réinscriptible ou un disque dur.

L'unité de mémorisation 14 mémorise notamment des programmes d'ordinateur comprenant des instructions dont l'exécution par le processeur 12 permet la mise en œuvre par l'unité électronique de commande 11 des procédés décrits ci-dessous.

L'unité de mémorisation 14 mémorise également des données utilisées dans le cadre des procédés décrits ci-dessous, notamment un secret VID, qui est en outre ici représentatif de l'identité du véhicule. En variante, il pourrait s'agir d'un secret dédié, indépendant de l'identité du véhicule.

Le secret VID est par exemple écrit dans l'unité de mémorisation 14 lors de la fabrication de l'unité électronique de commande 11, avant montage de cette unité électronique de commande 11 dans le véhicule 10.

Le terminal utilisateur 20 comprend un processeur 22, une mémoire 24 (par exemple une mémoire non-volatile réinscriptible), un module de communication sans fil 26, ici selon la technologie Bluetooth Low Energy (BLE), une interface utilisateur 21 (par exemple un écran tactile) et un module 28 de communication sur le réseau de téléphonie mobile susmentionné.

Dans certains modes de réalisation, le module de communication 28 peut comprendre une carte à puce qui mémorise des données de connexion associées à un abonnement au service de téléphonie mobile et permettant d'établir la connexion sur le réseau de téléphonie mobile.

La mémoire 24 mémorise le secret VID susmentionné (également mémorisé au sein de l'unité électronique de commande 11 du véhicule 10). Le secret VID a été transmis au terminal utilisateur 20 au préalable, par exemple lors d'une phase de souscription au service de commande de fonctionnalités du véhicule au moyen d'un terminal utilisateur, en utilisant éventuellement le réseau de téléphonie mobile précité.

Le module de communication sans fil 26 du terminal utilisateur 20 permet d'établir une liaison sans fil (ici de type Bluetooth Low Energy comme déjà indiqué) avec le module de communication sans fil 16 du véhicule 10 à travers laquelle le processeur 12 de l'unité électronique de commande 11 et le processeur 22 du terminal utilisateur 20 peuvent échanger des données, notamment en vue de l'authentification du terminal utilisateur 20 par l'unité électronique de commande 11 afin de commander, en cas d'authentification réussie, la fonctionnalité désirée (ici le déverrouillage des portes du véhicule).

Le module de communication sans fil 16 du véhicule 10 et le module de communication sans fil 26 du terminal utilisateur 20 peuvent chacun être dans un mode diffusion (mode *"advertising"* en technologie Bluetooth) et/ou dans un mode balayage (mode *"scanning"* en technologie Bluetooth).

Lorsqu'un module de communication sans fil 16, 26 est en mode diffusion, il diffuse des trames d'annonce qui peuvent avoir l'un des types suivants :
- ADV_NONCONN_IND (trames indicatives d'indisponibilité) ;
- ADV-IND (trames indicatives de disponibilité indirecte, c'est-à-dire de disponibilité pour une connexion avec un appareil quelconque) ;
- ADV_SCAN_IND (trames indicatives de disponibilité pour répondre à un requête d'informations - voir ci-dessous - mais d'indisponibilité pour une connexion) ;
- ADV_DIRECT (trames indicatives de disponibilité directe, non utilisées dans la suite).

Lorsqu'un module de communication sans fil 16, 26 est en mode balayage, il peut émettre :
- une requête d'informations (trame de type SCAN_REQ ou *"scan request*" selon la terminologie utilisée dans le protocole Bluetooth Low Energy) destinée à un appareil en mode diffusion afin que cet appareil lui communique des informations complémentaires ;
- une requête de connexion (trame de type CONNECT_REQ ou "*connection request*" selon la terminologie utilisée dans le protocole Bluetooth Low Energy) destinée à un appareil en mode diffusion afin d'initier une connexion avec cet appareil.

Lorsqu'un appareil en mode diffusion reçoit une requête d'informations en provenance d'un appareil en mode balayage, l'appareil en mode diffusion répond à cette requête par l'émission d'une réponse (trame d'annonce de type SCAN_RSP ou *"scan response"* selon la terminologie utilisée dans le protocole Bluetooth Low Energy) destinée à l'appareil en mode balayage et contenant les informations complémentaires.

Dans le cadre du protocole Bluetooth Low Energy, il est prévu que les trames d'établissement d'une connexion (listées ci-dessus) soit échangées au sein de canaux spécifiques, dits canaux de diffusion (en anglais *"advertising channels*")*,* distincts des canaux de données (en anglais : *"data channels*") utilisés pour transmettre les trames d'échange de données applicatives relatives à des connexions établies.

On remarque qu'il est souhaitable, dans le contexte des figures 1 et 2, que le module de communication sans fil 16 du véhicule 10 joue le rôle de périphérique (ou esclave) dans la communication sans fil établie du fait qu'en pratique, le module de communication sans fil de certains terminaux de type téléphone portable, susceptibles de constituer le terminal utilisateur 20, sont systématiquement configurés en tant que dispositif central (ou maître).

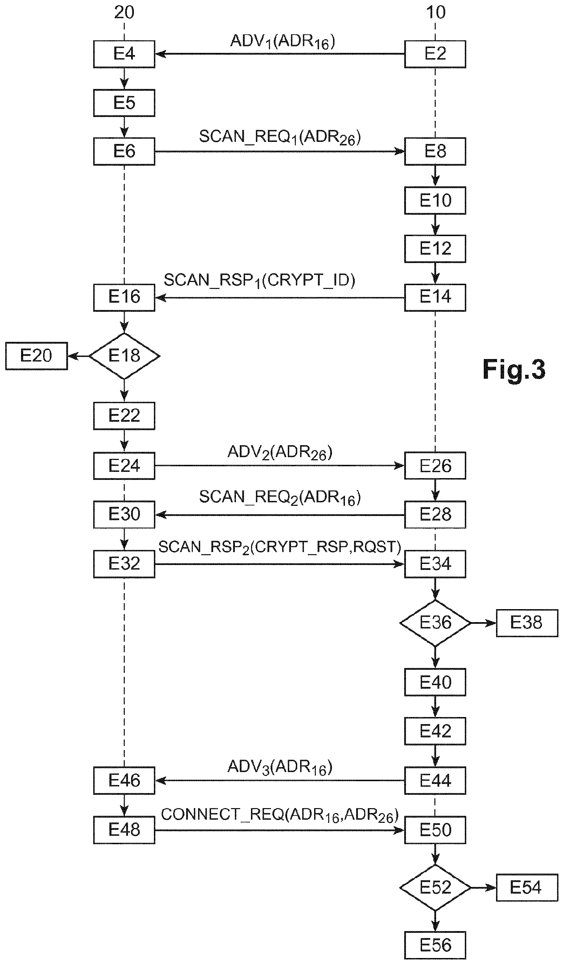

La figure 3 représente les étapes principales d'un premier exemple de procédé de commande d'une fonctionnalité d'un véhicule conforme à l'invention.

Dans cet exemple, le module de communication sans fil 16 du véhicule 10 est initialement en mode diffusion et émet des trames d'annonce, par exemple de type ADV_SCAN_IND ou de type ADV_IND. Le module de communication sans fil 16 est par exemple configuré dans ce mode par l'unité électronique de commande 11. L'utilisation du mode diffusion est avantageuse puisqu'elle permet de limiter la consommation électrique du module de communication sans fil 16.

Par ailleurs, au début du procédé de la figure 3, le module de communication sans fil 16 mémorise une liste de dispositifs autorisés à établir une connexion avec lui ("*advertising white list*")*.* La liste contient par exemple initialement les adresses (dans le système d'échange sans fil concerné, ici Bluetooth Low Energy) de clés physiques utilisant la même technologie de communication avec le module de communication sans fil 16 pour permettre un déverrouillage à distance des portes du véhicule 10. La liste peut également contenir des adresses d'appareils qui ont pu se connecter préalablement au module de communication sans fil 16 en suivant par exemple un processus du type décrit ici.

Le module de communication sans fil 26 du terminal utilisateur 20 est quant à lui en mode balayage (ou éventuellement en mode diffusion et balayage).

Le procédé débute à l'étape E2 à laquelle le module de communication sans fil 16 du véhicule 10 émet comme déjà indiqué une trame d'annonce ADV₁.

Cette trame contient l'adresse ADR₁₆ du module de communication sans fil 16 dans le système d'échange sans fil concerné (ici Bluetooth Low Energy).

Cette trame peut contenir en outre des informations indiquant que le module de communication sans fil 16 peut être utilisé dans le cadre d'un service de commande de fonctionnalités du véhicule au moyen d'un terminal utilisateur (information *"expose service*")*.*

Le module de communication sans fil 26 du terminal utilisateur 20 reçoit la trame ADV₁ contenant l'adresse ADR₁₆ à l'étape E4.

On considère que l'utilisateur du terminal utilisateur 20 souhaite alors mettre en œuvre une fonctionnalité du véhicule 10 et sélectionne par exemple à l'étape E5 un bouton virtuel associé à cette fonctionnalité sur l'interface utilisateur 21 du terminal utilisateur 20. En variante, cette étape E5 pourrait être omise (auquel cas le processus décrit ici est mis en œuvre dès lors que le module de communication sans fil 26 détecte une trame en provenance du module de communication sans fil 16, comme mentionné ci-dessus à l'étape E4, par exemple du fait d'un rapprochement suffisant des deux modules de communication 16, 26).

Le module de communication sans fil 26 émet alors à l'étape E6 une requête d'informations SCAN_REQ₁, accompagnée de sa propre adresse (adresse courante) ADR₂₆.

Le module de communication sans fil 16 du véhicule 10 reçoit la requête d'informations SCAN_REQ₁ contenant l'adresse ADR₂₆ à l'étape E8.

L'unité électronique de commande 11 du véhicule 10 prépare alors à l'étape E10 une première donnée d'authentification CRYPT_ID, comprenant un champ de données, obtenu par exemple par application d'une première fonction cryptographique f au secret VID, et/ou à un nombre RND, et/ou à l'adresse ADR₁₆ du module de communication sans fil 16 : f(VID, RND, ADR₁₆).

Le nombre RND est par exemple déterminé par tirage aléatoire par l'unité électronique de commande 11, soit lors de la mise en œuvre de l'étape E10, soit périodiquement. Dans ce cas il est nécessaire, dans la première donnée d'authentification CRYPT_ID, d'adjoindre au champ de données ce nombre aléatoire RND.

En variante, on pourrait utiliser à la place du nombre aléatoire, une valeur déterministe variable ou pseudo-aléatoire RND, par exemple un compteur incrémenté à chaque exécution de l'étape E10 ou une valeur dépendant du temps écoulé (par exemple exprimé en minutes) depuis un instant initial prédéterminé, cette valeur ne nécessitant pas d'être transmises dans la première donnée d'authentification CRYPT_ID.

L'unité électronique de commande 11 commande alors le passage du module de communication sans fil 16 en mode diffusion et balayage à l'étape E12.

Le module de communication sans fil 16 émet ensuite à l'étape E14 une réponse SCAN_RSP₁ destinée au module de communication sans fil 26 du terminal utilisateur 20 et contenant la première donnée d'authentification CRYPT_ID ainsi que l'adresse ADR₁₆. La première donnée d'authentification CRYPT_ID est par exemple transmise au sein d'un champ standard dans la trame SCAN_RSP₁, tel que le champ *"Manufacturer Specific Data".*

Lorsqu'on utilise à la place du nombre aléatoire une valeur déterministe que le processeur 22 du terminal utilisateur 20 peut déterminer par lui-même (par exemple lorsque cette valeur est un compteur partagé entre le terminal utilisateur 20 et le véhicule 10, ou une valeur dépendant du temps écoulé depuis un instant initial prédéterminé connu du terminal utilisateur 20 et du véhicule 10), on transmet à l'étape E14 la première donnée d'authentification CRYPT_ID, la valeur déterministe ne nécessitant pas d'être transmises dans la première donnée d'authentification CRYPT_ID.

L'utilisation d'une trame de réponse ("*scan response*") à une requête d'information préalable (*"scan request"*) pour transmettre (*i.e.* transporter) la première donnée d'identification CRYPT_ID permet de ne transmettre cette donnée que sur demande et non systématiquement, ce qui est avantageux tant sur le plan de la sécurité que sur celui de la consommation électrique.

On pourrait toutefois prévoir en variante que la première donnée d'authentification CRYPT_ID soit transmise dans les trames de diffusion ("*advertising*") émises par le module de communication 16 (telles que celle émise à l'étape E2). Le module de communication sans fil 26 du terminal utilisateur 20 reçoit la réponse SCAN_RSP₁ contenant la première donnée d'authentification CRYPT_IDà l'étape E16.

Le processeur 22 peut ainsi vérifier à l'étape E18 que la première donnée d'authentification CRYPT_ID a bien été calculée au moyen d'un secret égal au secret VID mémorisé dans la mémoire 24 (en vérifiant si on a bien : CRYPT_ID = f(VID,RND,ADR₁₆) pour le cas ou le nombre RND est une valeur déterministe ; ou CRYPT_ID = f(VID,RND,ADR₁₆) | RND pour le cas ou le nombre RND est une valeur non déterministe. Ceci permet pour le terminal utilisateur 20 de s'assurer qu'il est bien en train d'initier une connexion avec le véhicule souhaité (qui partage le secret VID).

Si la vérification de l'étape E18 ne se fait pas correctement, le processeur 22 procède à l'étape E20 à laquelle il est mis fin au processus d'établissement d'une connexion.

Si la vérification de l'étape E18 se fait correctement, le processeur 22 détermine à l'étape E22 une seconde donnée d'authentification CRYPT_RSP, par exemple par application d'une seconde fonction cryptographique g (éventuellement identique à la première fonction cryptographique f) au secret VID, à la première donnée d'authentification CRYPT_ID et à une requête RQST de commande de la fonctionnalité souhaitée :
CRYPT_RSP = g(VID, CRYPT_ID, RQST). Selon une variante envisageable, il est possible d'utiliser, à la place (ou en sus) du secret VID, un autre secret (par exemple une clé cryptographique) mémorisé à la fois dans la mémoire 24 du terminal utilisateur 20 et dans l'unité de mémorisation 14 de l'unité électronique de commande 11 (suite par exemple à l'inscription de l'utilisateur à un service de commande de fonctionnalités du véhicule 10 au moyen du terminal utilisateur 20).

On comprend que la valeur CRYPT_ID (première donnée d'authentification) émise par l'unité électronique de commande 11 et reçue par le terminal utilisateur à l'étape E16 est ici utilisée comme défi. Le processeur 22 du terminal utilisateur 20 détermine la réponse CRYPT_RSP (seconde donnée d'authentification) sur la base notamment de ce défi CRYPT_ID et du secret VID afin de démontrer à l'unité électronique de commande 11 qu'il détient bien le secret VID, sans transmission de ce dernier.

En variante, on pourrait utiliser en tant que défi (à la place de la première donnée d'authentification CRYPT_ID) une valeur déterministe variable, par exemple un compteur incrémenté à chaque exécution de l'étape E22 ou une valeur dépendant du temps écoulé (par exemple exprimé en minutes) depuis un instant initial prédéterminé, cette valeur étant connue seulement du terminal utilisateur 20 et de l'unité électronique de commande 11. Il est envisageable dans un tel cas de ne pas transmettre la première donnée d'authentification CRYPT_ID du véhicule 10 au terminal utilisateur 20 (le procédé ne comprenant alors aucune identification du véhicule 10 par le terminal utilisateur 20, mais seulement une authentification du terminal utilisateur 20 par le véhicule 10, comme décrit plus bas à l'étape E36, ce que l'on peut considérer suffisant dans certaines situations pour autoriser la commande de la fonctionnalité).

Dans un mode de réalisation préférentiel, la première donnée d'authentification CRYPT_ID doit être modifiée au moins à chaque réception de CRYPT_RSP.

La requête RQST de commande de la fonctionnalité souhaitée est quant à elle un ensemble de données représentatif notamment de la fonctionnalité du véhicule 10 que l'utilisateur souhaite commander (sélectionnée ici par l'utilisateur à l'étape E5 décrite plus haut), par exemple le déverrouillage des portes du véhicule 10.

Le module de communication sans fil 26 diffuse alors à l'étape E24 une trame ADV₂ de type ADV_SCAN_IND ou de type ADV_IND. Une telle trame peut également indiquer que le terminal utilisateur 20 sollicite la mise en place du service de commande de fonctionnalités du véhicule au moyen du terminal utilisateur (information *"solicit service*")*,* ainsi qu'éventuellement à nouveau l'adresse ADR₂₆. Si le module de communication sans fil 26 était auparavant en mode balayage seul, il bascule pour ce faire en mode diffusion et balayage préalablement à l'étape E22.

Le module de communication sans fil 16 du véhicule 10 reçoit à l'étape E26 la trame ADV₂ diffusée (ce qui est possible du fait du passage en mode diffusion et balayage à l'étape E12).

Le module de communication sans fil 16 émet alors à l'étape E28 une requête d'informations SCAN_REQ₂ destinée au module de communication sans fil 26 du terminal utilisateur 20 (éventuellement accompagnée de l'adresse ADR₁₆).

Le module de communication sans fil 26 du terminal utilisateur 20 reçoit la requête d'informations SCAN_REQ₂ à l'étape E30 et émet en réponse une trame d'annonce SCAN_RSP₂, ici de type SCAN_RSP, incluant l'adresse ADR₂₆, la seconde donnée d'authentification CRYPT_RSP et la requête RQST de commande de la fonctionnalité souhaitée (étape E32). La seconde donnée d'authentification CRYPT_RSP et/ou la requête RQST sont par exemple transmis au sein d'un champ disponible dans la trame SCAN_RSP₂, tel que le champ *"Manufacturer Specific Data".*

Le module de communication sans fil 16 du véhicule 10 reçoit la réponse (trame d'annonce) SCAN_RSP₂, la seconde donnée d'authentification CRYPT_RSP et la requête RQST à l'étape E34.

L'unité électronique de commande 11 (précisément le processeur 12) peut ainsi vérifier à l'étape E36 que la seconde donnée d'authentification CRYPT_RSP a bien été calculée au moyen d'un secret identique au secret VID mémorisé dans l'unité de mémorisation 14 (en vérifiant si on a bien : CRYPT_RSP = g(VID,CRYPT_ID,RQST) où CRYPT_ID, RQST sont respectivement la seconde donnée d'authentification CRYPT_ID et la requête reçues à l'étape E34 et VID la donnée mémorisée dans l'unité de mémorisation 14), ce qui permet à l'unité électronique de commande de s'assurer que le terminal utilisateur 20 qui cherche à se connecter détient bien le secret partagé VID (puisqu'il a été en mesure de déterminer la seconde donnée d'authentification CRYPT_RSP associée au défi CRYPT_ID au moyen de ce secret partagé VID).

Dans la variante mentionnée ci-dessus où un autre secret (mémorisé notamment dans l'unité de mémorisation 14) est utilisé à la place (ou en sus) du secret VID, cet autre secret est lu dans l'unité de mémorisation 14 et utilisé pour vérifier la seconde donnée d'authentification CRYPT_RSP.

Si la vérification de l'étape E36 ne se fait pas correctement, l'unité électronique de commande 11 met fin au processus de connexion (étape E38).

Si la vérification de l'étape E36 se fait correctement, l'unité électronique de commande 11 commande la mise en œuvre de la fonctionnalité désignée par la requête RQST reçue à l'étape E34, par exemple en émettant une commande dédiée à destination de l'actionneur 15 (étape E40). La fonctionnalité peut ainsi être mise en œuvre sans attendre que la connexion soit établie entre les deux modules de communication sans fil 16, 26.

On remarque que, selon certains modes de réalisation envisageables, notamment lorsque seule la commande de la fonctionnalité est requise, le procédé pourrait se terminer à cette étape E40.

Dans les autres cas, si l'adresse ADR26 du module de communication sans fil 26 ne fait pas partie de la liste des adresses des dispositifs autorisés ("*white list*")*,* l'unité électronique de commande configure le module de communication sans fil 16 en commandant l'ajout dans la liste précitée de l'adresse courante ADR₂₆ du dispositif de communication sans fil 26 du terminal 20 (étape E42).

Le module de communication sans fil 16 diffuse alors à l'étape E44 une trame ADV₃ indiquant qu'il est disponible pour une connexion avec l'un des appareils mentionnés dans la liste précitée (trame de disponibilité indirecte, de type ADV_IND). Comme pour la trame émise à l'étape E2, cette trame peut contenir l'adresse ADR₁₆ du module de communication sans fil 16 et des informations indiquant que le module de communication sans fil 16 peut être utilisé dans le cadre d'un service de commande de fonctionnalités du véhicule au moyen d'un terminal utilisateur (information *"expose service*")*.*

Cette trame ADV₃ est reçue par le module de communication sans fil 26 du terminal utilisateur 20 (dont on rappelle qu'il fonctionne en mode balayage) à l'étape E46.

Le module de communication sans fil 26 du terminal utilisateur 20 peut alors émettre à l'étape E48 une requête de connexion (trame de type CONNECT_REQ) destinée au module de communication sans fil 16 du véhicule 10, qui comprend l'adresse ADR₁₆ de ce module destinataire et l'adresse ADR₂₆ du module de communication sans fil 26 (émetteur).

Le module de communication sans fil 16 du véhicule 10 reçoit la requête de connexion CONNECT_REQ, ainsi notamment que l'adresse ADR₂₆ à l'étape E50.

Le module de communication sans fil 16 peut ainsi déterminer à l'étape E52 si l'adresse ADR₂₆ reçue à l'étape E46 fait partie de la liste précitée (ce qui est normalement le cas grâce à l'ajout de l'étape E42).

Dans l'affirmative, le module de communication sans fil 16 accepte la requête et procède à l'établissement de la connexion avec le module de communication sans fil 26 (étape E56), par exemple afin de réaliser d'autres échanges à travers cette connexion et de commander par exemple une autre fonctionnalité du véhicule 10 (par exemple le démarrage du moteur du véhicule 10) au moyen du terminal utilisateur 20.

Dans la négative (ce qui n'est normalement pas le cas dans le procédé représenté à la figure 3), ceci signifie que le terminal utilisateur qui tente de se connecter n'a pas été inscrit dans la liste précitée et que sa connexion n'est donc pas possible (étape E54).

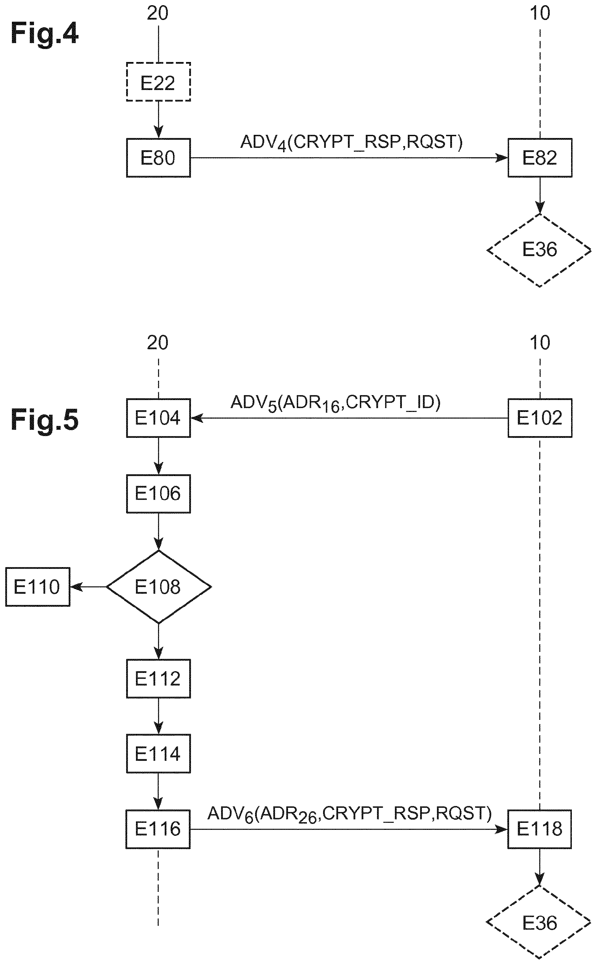

La figure 4 représente des étapes spécifiques à un second exemple de procédé de commande d'une fonctionnalité d'un véhicule conforme à l'invention.

Ce procédé débute en effet par des étapes identiques aux étapes E2 à E22 décrites ci-dessus et qui ne seront donc pas décrites à nouveau.

Une fois la seconde donnée d'authentification CRYPT_RSP déterminée, le second module de communication sans fil 26 diffuse, à une étape E80, une trame d'annonce ADV₄ qui contient la seconde donnée d'authentification CRYPT_RSP et la requête RQST (ainsi qu'éventuellement l'adresse ADR₂₆). Cette trame d'annonce ADV₄ peut être de type ADV_SCAN_IND, de type ADV_NONCONN_IND, ou de type ADV_IND.

La seconde donnée d'authentification CRYPT_RSP et/ou la requête RQST sont par exemple transmis au sein d'un champ disponible dans la trame ADV₄, tel que le champ *"Manufacturer Specific Data".*

Le premier module de communication sans fil 16 reçoit la trame d'annonce ADV₄, et par conséquent la seconde donnée d'authentification CRYPT_RSP et la requête RQST, à l'étape E82. Ceci est possible du fait que le premier module de communication sans fil 16 est en mode balayage (grâce à la mise en œuvre préalable, dans le présent procédé, d'une étape identique à l'étape E12 décrite plus haut).

Le procédé se poursuit alors de manière identique à ce qui a été décrit ci-dessus en référence à la figure 3, à partir de l'étape E36.

La figure 5 représente des étapes spécifiques à un troisième exemple de procédé de commande d'une fonctionnalité du véhicule conforme à l'invention.

Ce procédé débute lors d'une étape E102 où le premier module de communication sans fil 16 est en mode diffusion et balayage, et diffuse des trames d'annonce ADV₅ contenant l'adresse ADR16 et (par exemple dans un champ disponible, tel que le champ *"Manufacturer Specific Data"*) un nombre aléatoire RND et une première donnée d'authentification CRYPT_ID.

Les trames d'annonces ADV₅ diffusées peuvent être de type ADV_SCAN_IND, de type ADV_IND, ou de type ADV_NONCONN_IND.

Le nombre aléatoire RND et la première donnée d'authentification CRYPT_ID sont par exemple déterminés par le processeur 12 de l'unité électronique de commande 11 comme décrit ci-dessus (voir la description de l'étape E10). Le nombre aléatoire RND et par conséquent la première donnée d'authentification CRYPT_ID (qui en dépend) peuvent être modifiés périodiquement, ainsi qu'à chaque fin de connexion du premier module de communication sans fil 16 avec un autre module du même type, pour empêcher tout rejeu, par un tiers malintentionné, de la seconde donnée d'authentification utilisée ci-dessous.

Le second module de communication sans fil 26 est quant à lui alors en mode balayage et reçoit les trames d'annonce ADV₅ à l'étape E105.

L'utilisateur du terminal utilisateur 20 sélectionne alors à l'étape E106 un bouton virtuel de l'interface utilisateur 21 afin de mettre en œuvre une fonctionnalité du véhicule 10. En variante, cette étape E106 pourrait être omise, comme déjà indiqué dans le cadre de la figure 3.

Le processeur 22 vérifie alors (étape E108) que la première donnée d'authentification CRYPT_ID (contenue dans la dernière trame d'annonce ADV₅ reçue) a bien été calculée au moyen d'un secret égal au secret VID mémorisé dans la mémoire 24 (en vérifiant si on a bien : CRYPT_ID = f(VID,RND,ADR₁₆) pour le cas ou le nombre RND est une valeur déterministe ; ou CRYPT_ID = f(VID,RND,ADR₁₆) | RND pour le cas ou le nombre RND est une valeur non déterministe.), ce qui permet pour le terminal utilisateur 20 de s'assurer qu'il est bien en train d'initier une connexion avec le véhicule souhaité.

Si la vérification de l'étape E108 ne se fait pas correctement, le processeur 22 procède à l'étape E110 à laquelle il est mis fin au processus d'établissement d'une connexion sans commande de la fonctionnalité.

Si la vérification de l'étape E108 se fait correctement, le processeur 22 commande à l'étape E112 le passage du second module de communication sans fil 26 en mode diffusion.

Le processeur 22 détermine en outre à l'étape E114 une seconde donnée d'authentification CRYPT_RSP, par exemple par application d'une fonction cryptographique h au secret VID, à la première donnée d'authentification CRYPT_ID et à une requête RQST de commande de la fonctionnalité souhaitée :
CRYPT_RSP = h(VID, CRYPT_ID, RQST).

Le second module de communication sans fil 26 diffuse alors (étape E116) une trame d'annonce ADV₆ qui contient la seconde donnée d'authentification CRYPT_RSP et la requête RQST (ainsi qu'éventuellement l'adresse ADR₂₆). Cette trame d'annonce ADV₄ peut être de type ADV_SCAN_IND, de type ADV_NONCONN_IND, ou de type ADV_IND.

La seconde donnée d'authentification CRYPT_RSP et/ou la requête RQST sont par exemple transmis au sein d'un champ disponible dans la trame ADV₆, tel que le champ *"Manufacturer Specific Data".*

Le premier module de communication sans fil 16 reçoit la trame d'annonce ADV₄, et par conséquent la seconde donnée d'authentification CRYPT_RSP et la requête RQST, à l'étape E118. Ceci est possible du fait que le premier module de communication sans fil 16 est en mode diffusion et balayage, comme indiqué ci-dessus.

Le procédé se poursuit alors de manière identique à ce qui a été décrit ci-dessus en référence à la figure 3, à partir de l'étape E36.

Dans les exemples décrits ci-dessus, on procède à une authentification mutuelle entre le terminal utilisateur 20 et le véhicule 10 avant de commander la fonctionnalité. En variante, il est envisageable de ne procéder qu'à la vérification, au sein du véhicule 10 (au moyen de l'unité électronique de commande 11), d'une donnée d'authentification générée par le terminal utilisateur 20 (en pratique, par son processeur 22) afin de s'assurer que le terminal utilisateur 20 détient bien les droits nécessaires pour commander la fonctionnalité.

Dans un tel cas, les étapes de détermination et d'émission de la première donnée d'authentification CRYPT_ID (étapes E2 à E18 pour les figures 3 et 4, étapes E102 à E108 en figure 5) sont omises et la donnée d'authentification CRYPT_RSP n'est plus déterminée en fonction d'une donnée reçue au préalable, mais prend par exemple la forme d'un code d'authentification de message (ou MAC pour *"Message Authentication Code"*)*.*

## Revendications

1. Procédé de commande d'une fonctionnalité d'un véhicule (10) équipé d'un premier module de communication (16), au moyen d'un terminal utilisateur (20) équipé d'un second module de communication (26), le premier (16) et le second module (26) de communication étant adaptés pour communiquer selon le protocole Bluetooth Low Energy et pouvant être dans un mode diffusion et/ou dans un mode balayage, le procédé de commande comprenant les étapes suivantes :
- détermination (E22 ; E114) d'une donnée d'authentification (CRYPT_RSP) par un processeur (22) du terminal utilisateur (20) ;
- émission (E32 ; E80 ; E116) par le second module de communication (26) fonctionnant en mode diffusion, au sein d'au moins une trame d'annonce (ADV₄, ADV₆, SCAN_RSP₂), d'une requête (RQST) de commande de la fonctionnalité et de la donnée d'authentification (CRYPT_RSP) ;
- réception (E34 ; E82 ; E118) de la trame d'annonce (ADV₄ ; ADV₆ ; SCAN_RSP₂) par le premier module de communication (16) et vérification (E36) de la donnée d'authentification (CRYPT_RSP) par une unité électronique de commande (11) du véhicule (10) ;
- commande de la fonctionnalité par l'unité électronique de commande (11) en cas de vérification positive.

2. Procédé de commande selon la revendication 1, comprenant les étapes préalables suivantes :
- émission (E24), par le second module de communication (26), d'au moins une trame d'annonce (ADV₂),
- réception (E26) par le premier module de communication (16) de ladite au moins une trame d'annonce (ADV₂)
- émission (E28) par le premier module de communication (16), d'au moins une trame d'annonce (SCAN_REQ₂), à destination du deuxième module de communication (26).

3. Procédé de commande selon la revendication 1 ou 2, comprenant une étape préalable d'émission (E14 ; E102), par le premier module de communication (16), d'au moins une trame d'annonce (ADV5 ; SCAN-RSP₁), à destination du deuxième module de communication (26) comprenant une donnée d'interrogation (CRYPT_ID) comprenant un champ de données (f(VID, RND, ADR₁₆)).

4. Procédé de commande selon la revendication 3, **caractérisé en ce que** champ de données (f(VID, RND, ADR₁₆)) de la donnée d'interrogation (CRYPT_ID) est cryptée.

5. Procédé de commande selon la revendication 3 ou 4, **caractérisé en ce que** le champ de données (f(VID, RND, ADR₁₆)) est obtenu au moins à partir d'une donnée d'identification (VID) du véhicule (10).

6. Procédé de commande selon la revendication 5, **caractérisé en ce que** terminal utilisateur (20) vérifie (E18) la donnée d'identification du véhicule (VID) et commande l'émission (E32) de la requête de commande et de la donnée d'authentification en cas de vérification positive.

7. Procédé de commande selon l'une des revendications 3 à 6, comprenant les étapes préalables suivantes :
- émission (E2), par le premier module de communication (16), d'au moins une trame d'annonce (ADV₁),
- réception, par le deuxième module de communication (26), de ladite au moins une trame d'annonce (ADV₁),
- émission, par le deuxième module de communication (26), d'au moins une trame d'annonce (SCAN_REQ₁), à destination du premier module de communication (16).

## Patentansprüche

1. Verfahren zum Steuern einer Funktion eines Fahrzeugs (10), das mit einem ersten Kommunikationsmodul (16) ausgestattet ist, mittels eines Benutzerendgeräts (20), das mit einem zweiten Kommunikationsmodul (26) ausgestattet ist, wobei das erste (16) und das zweite Kommunikationsmodul (26) angepasst sind, gemäß dem Protokoll "Bluetooth Low Energy" zu kommunizieren, und sich in einem Übertragungs- und/oder einem Suchmodus befinden können, wobei das Verfahren zum Steuern die folgenden Schritte aufweist:
- Bestimmen (E22, E114) eines Authentifizierungsdatenelements (CRYPT_RSP) durch einen Prozessor (22) des Benutzerendgeräts (20);
- Senden (E32, E80, E116) einer Anforderung (RQST) zum Steuern der Funktion und des Authentifizierungsdatenelements (CRYPT_RSP) innerhalb mindestens eines Ankündigungsrahmens (ADV₄, ADV₆, SCAN_RSP₂) durch das zweite Kommunikationsmodul (26), das im Übertragungsmodus arbeitet;
- Empfangen (E34, E82, E118) des Ankündigungsrahmens (ADV₄; ADV₆; SCAN_RSP₂) durch das erste Kommunikationsmodul (16) und Überprüfen (E36) des Authentifizierungsdatenelements (CRYPT_RSP) durch eine elektronische Steuereinheit (11) des Fahrzeugs (10);
- Steuern der Funktion durch die elektronische Steuereinheit (11) bei positiver Überprüfung.

2. Verfahren zum Steuern nach Anspruch 1, das die folgenden vorausgehenden Schritte aufweist:
- Senden (E24) von mindestens einem Ankündigungsrahmen (ADV₂) durch das zweite Kommunikationsmodul (26),
- Empfangen (E26) des mindestens einen Ankündigungsrahmens (ADV₂) durch das erste Kommunikationsmodul (16),
- Senden (E28) von mindestens einem Ankündigungsrahmen (SCAN_REQ₂) durch das erste Kommunikationsmodul (16) an das zweite Kommunikationsmodul (26).

3. Verfahren zum Steuern nach Anspruch 1 oder 2, das einen vorausgehenden Schritt zum Senden (E14, E102) von mindestens einem Ankündigungsrahmen (ADV₅, SCAN_RSP₁) durch das erste Kommunikationsmodul (16) an das zweite Kommunikationsmodul (26) aufweist, der ein Abfragedatenelement (CRYPT_ID) mit einem Datenfeld (f(VID, RND, ADR₁₆)) aufweist.

4. Verfahren zum Steuern nach Anspruch 3, **dadurch gekennzeichnet, dass** das Datenfeld (f(VID, RND, ADR₁₆)) des Abfragedatenelements (CRYPT_ID) verschlüsselt ist.

5. Verfahren zum Steuern nach Anspruch 3 oder 4, **dadurch gekennzeichnet, dass** das Datenfeld (f(VID, RND, ADR₁₆)) zumindest aus einem Identifikationsdatenelement (VID) des Fahrzeugs (10) erhalten wird.

6. Verfahren zum Steuern nach Anspruch 5, **dadurch gekennzeichnet, dass** das Benutzerendgerät (20) das Identifikationsdatenelement (VID) des Fahrzeugs überprüft (E18) und das Senden (E32) der Anforderung zum Steuern und des Authentifizierungsdatenelements bei positiver Überprüfung steuert.

7. Verfahren zum Steuern nach einem der Ansprüche 3 bis 6, das die folgenden vorausgehenden Schritte aufweist:
- Senden (E2) von mindestens einem Ankündigungsrahmen (ADV₁) durch das erste Kommunikationsmodul (16),
- Empfangen des mindestens einen Ankündigungsrahmens (ADV₁) durch das zweite Kommunikationsmodul (26),
- Senden, von mindestens einem Ankündigungsrahmen (SCAN_REQ₁) durch das zweite Kommunikationsmodul (26) an das erste Kommunikationsmodul (16).

## Claims

1. Method for controlling a functionality of a vehicle (10) provided with a first communication module (16), at least one user terminal (20) provided with a second communication module (26), the first (16) and the second (26) communication module being suitable for communication according to the Bluetooth Low Energy protocol and being able to be in a broadcast mode and/or in a scan mode, the control method comprising the following steps:
- determining (E22; E114) an authentication data item (CRYPT_RSP) by means of a processor (22) of the user terminal (20);
- transmitting (E32; E80; E116), by means of the second communication module (26) operating in broadcast mode, within at least one advertising frame (ADV₄, ADV₆, SCAN_RSP₂), a request (RQST) for control of the functionality and the authentication data item (CRYPT_RSP);
- receiving (E34; E82; E118) the advertising frame (ADV₄, ADV₆, SCAN_RSP₂) by means of the first communication module (16) and verifying (E36) the authentication data item (CRYPT_RSP) by means of an electronic control unit (11) of the vehicle (10);
- controlling the functionality by means of the electronic control unit (11) in the case of positive verification.

2. Control method according to Claim 1, comprising the following prior steps:
- transmitting (E24), by means of the second communication module (26), at least one advertising frame (ADV₂) ;
- receiving (E26), by means of the first communication module (16), said at least one advertising frame (ADV₂) ;
- transmitting (E28), by means of the first communication module (16), at least one advertising frame (SCAN_REQ₂) to the second communication module (26) .

3. Control method according to Claim 1 or 2, comprising a prior step of transmitting (E14; E102), by means of the first communication module (16), at least one advertising frame (ADV5; SCAN_RSP₁) to the second communication module (26) comprising an interrogation data item (CRYPT_ID) comprising a data field (f (VID, RND, ADR₁₆)).

4. Control method according to Claim 3, **characterized in that** the data field (f (VID, RND, ADR₁₆)) of the interrogation data item (CRYPT_ID) is encrypted.

5. Control method according to Claim 3 or 4, **characterized in that** the data field (f(VID, RND, ADR₁₆)) is obtained at least from an identification data item (VID) of the vehicle (10).

6. Control method according to Claim 5, **characterized in that** the user terminal (20) verifies (E18) the identification data item of the vehicle (VID) and controls the transmission (E32) of the request for control and the authentication data item in the case of positive verification.

7. Control method according to one of Claims 3 to 6, comprising the following prior steps:
- transmitting (E2), by means of the first communication module (16), at least one advertising frame (ADV₁) ;
- receiving, by means of the second communication module (16), said at least one advertising frame (ADV₁) ;
- transmitting, by means of the second communication module (26), at least one advertising frame (SCAN_REQ₁), to the first communication module (16) .
